**Europäisches Patentamt**

**European Patent Office**

**Office européen des brevets**

(19)

(11) Numéro de publication : **0 508 919 A1**

# (12) DEMANDE DE BREVET EUROPEEN

(21) Numéro de dépôt : **92440032.8**

(22) Date de dépôt : **02.03.92**

(51) Int. Cl.⁵ : **B23P 19/06,** B25B 13/50, B27M 3/00

(30) Priorité : **08.04.91 FR 9104397**

(43) Date de publication de la demande :
**14.10.92 Bulletin 92/42**

(84) Etats contractants désignés :
**AT BE CH DE DK ES GB GR IT LI LU MC NL PT SE**

(71) Demandeur : **S.A. POREAUX & Cie MENUISERIES INDUSTRIELLES**
**Zone Industrielles de St Martin sur le Pré, BP 30**
**F-51005 Chalons sur Marne Cédex (FR)**

(72) Inventeur : **Morizot, Christian**
**17, rue Georges Brassens**
**F-51000 Sarry (FR)**

(74) Mandataire : **Arbousse-Bastide, Jean-Claude Philippe**
**CABINET ARBOUSSE BASTIDE 20, rue de Copenhague**
**F-67000 Strasbourg (FR)**

(54) **Procédé de pose automatique de fiches d'articulation sur ouvrants et dormants de menuiseries.**

(57)    Ce procédé consiste, après percement d'un avant-trou (20) dans le support (2), à évaluer la distance (Y) qui sépare ledit support (2) de la demi-fiche (1) à fixer, maintenue à l'extrémité de l'axe d'un moteur à couple constant et, au moyen d'un calculateur connaissant la position finale désirée, à modifier le positionnement de la demi-fiche (1), préalablement à l'opération de vissage en l'amenant par rotation ou translation à une position (Y') de manière que le vissage résultant de la synchronisation d'une translation et d'une rotation amène la demi-fiche (1) à la position finale désirée.

Fig.1

Fig. 2

EP 0 508 919 A1

La présente invention a pour objet un procédé de pose automatique de fiches d'articulation sur ouvrants et dormants de menuiseries, en bois ou autres matériaux, lesdites fiches se solidarisant auxdits ouvrants et dormants par vissage de leurs tiges filetées autotaraudeuses.

De telles fiches sont de plus en plus fréquemment utilisées dans le bâtiment, une fiche d'articulation comprenant deux demi-fiches, l'une mâle et l'autre femelle, dont chacune comporte une tige filetée autotaraudeuse, disposée perpendiculairement à l'axe de pivotement de l'ouvrant sur le dormant, permettant leur fixation soit sur l'ouvrant soit sur le dormant.

Il existe actuellement des dispositifs de pose automatique de telles fiches, dont le procédé de mise en oeuvre comprend d'abord le perçage d'un avant-trou, puis l'introduction de la tige filetée autotaraudeuse dans ledit avant-trou, en exerçant simultanément une rotation et une poussée axiale, généralement au moyen d'un vérin pneumatique.

Ce type de procédé présente des inconvénients, dont le principal est l'imprécision de l'assemblage, due au fait que d'une part l'avance du vérin n'est pas synchronisée avec la rotation de la fiche, laquelle est plus introduite en force que vissée, et que d'autre part l'arrêt automatique en position est toujours à plus ou moins un tour.

Cette imprécision a pour conséquence l'obligation d'une intervention manuelle pour repositionner la fiche d'une part angulairement et d'autre part au niveau de sa profondeur d'enfoncement, ainsi que pour adapter les différents écarts entre l'axe de pivotement de l'ouvrant sur le dormant, afin d'obtenir un fonctionnement correct dudit ouvrant sur le dormant assurant la meilleure étanchéité possible entre les deux éléments articulés.

Or la correction angulaire entraîne nécessairement une rotation de la tige filetée, ce qui modifie la profondeur d'enfoncement, et les réglages manuels en sont d'autant plus délicats. D'autre part, du fait de la non-synchronisation de la poussée axiale et de la rotation de la fiche, le vissage s'apparente plus à un clouage et la résistance à l'arrachement est faible, notamment dans le cas de bois tendres.

Enfin, les dispositifs actuels comportent une partie opérative complexe, qui doit tourner très vite et s'arrêter brutalement en position, avec pour conséquence des chocs, des vibrations et des usures rapides qui augmentent encore l'imprécision de ces dispositifs.

La présente invention permet de remédier à ces inconvénients en proposant un procédé de pose automatique de fiches faisant appel à une mécanique simple et compacte et autorisant un positionnement angulaire et en profondeur précis, avec une qualité de vissage permettant une tenue à l'arrachement optimum quel que soit le type de bois.

Le procédé de pose automatique de fiches selon la présente invention consiste à effectuer dans un premier temps, comme dans les procédés existants, le perçage d'un avant-trou, puis, la demi-fiche étant positionnée dans les mors d'un mandrin solidaire de l'extrémité de l'axe d'un moteur à couple constant, à évaluer au moyen d'un palpeur la distance séparant ladite demi-fiche de l'ouvrant ou du dormant, puis, au moyen d'un calculateur connaissant la position finale désirée, à rectifier la position de la demi-fiche soit en rotation, soit en translation en la rapprochant ou en l'éloignant de l'ouvrant ou du dormant, par une translation sans rotation, de manière que la nouvelle position corresponde à la distance à parcourir linéairement en synchronisation avec la rotation pour amener la fiche, en fin d'opération, dans la position désirée.

Les avantages et les caractéristiques de la présente invention ressortiront plus clairement de la description qui suit et qui se rapporte au dessin annexé, lequel en représente un mode de réalisation non limitatif.

Dans le dessin annexé :
– la figure 1 représente une vue de profil et en coupe d'une demi-fiche présentée devant le support auquel elle doit être assemblée au moyen du procédé selon l'invention.
– la figure 2 représente la même demi-fiche dont la position par rapport au support a été rectifiée.
– la figure 3 représente la même demi-fiche assemblée à son support.

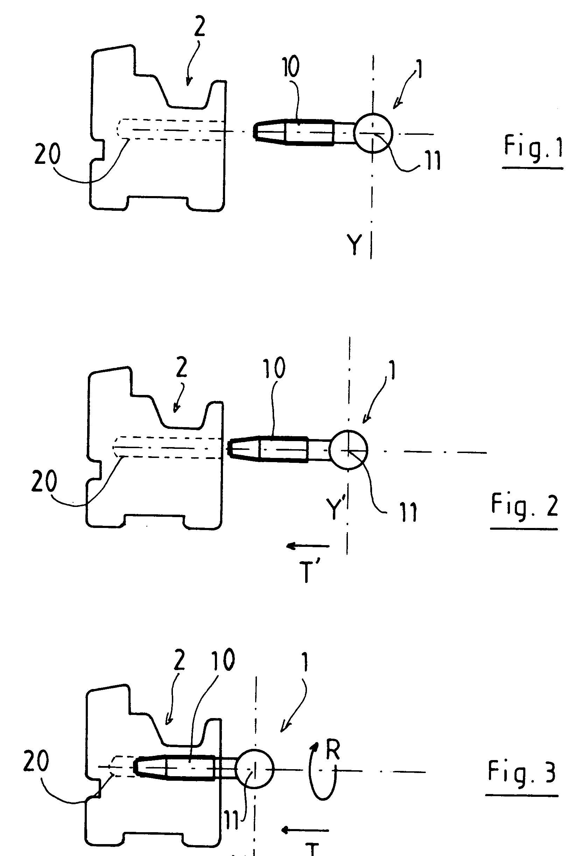

Si on se réfère à la figure 1 on peut voir une demi-fiche 1 à assembler dans un support 2, ouvrant ou dormant, percé d'un avant-trou 20.

La demi-fiche 1, qui comporte une tige filetée autotaraudeuse 10, est positionnée dans un mandrin, non représenté, par exemple dans la position qu'elle doit avoir une fois assemblée au support 2. Un palpeur détermine la position Y de la demi-fiche, en l'occurence de l'axe de pivotement 11 du gond, par rapport au support 2.

Si on se réfère maintenant à la figure 2, on peut voir que suite aux calculs effectués par un calculateur, à partir de la position Y et de la position X finale désirée, l'outil portant la demi-fiche subit une translation T' sans rotation, de manière que la demi-fiche 1 soit dans une nouvelle position Y'. Cette nouvelle position Y' est telle que la distance qui doit être parcourue entre la position Y' et la position X finale en synchronisant la rotation et la translation corresponde à un nombre entier de tours de la demi-fiche 1.

Si on se réfère à la figure 3 on peut voir que la translation T synchronisée à la rotation R aboutit au positionnement de la demi-fiche 1 à une position X qui est dans ce cas angulairement la même que la position de départ.

Il est également possible d'arriver au même résultat en procédant différemment de manière que, lorsque la position Y a été reconnue, au lieu de déterminer une nouvelle position Y', on calcule, suivant la distance à parcourir pour aboutir à la position X, le nombre de tours, entiers ou non, à effectuer, et on corrige corrélativement la position angulaire de départ avant l'opération de vissage, le nombre de tours n'étant en ce cas pas forcément entier.

La synchronisation de l'avance linéaire et de la rotation peut être obtenue soit par un système mécanique, comme la vis mère d'un tour mécanique, soit par un système électronique qui permet de réaliser un dispositif simple et plus compact.

**Revendications**

**1)** Procédé de pose automatique de fiches d'articulation sur ouvrants et dormants de menuiseries, caractérisé en ce qu'il consiste, après percement d'un avant-trou (20) dans le support (2), à évaluer la distance (Y) qui sépare ledit support (2) de la demi-fiche (1) à fixer, maintenue à l'extrémité de l'axe d'un moteur à couple constant et au moyen d'un calculateur connaissant la position finale désirée (X), à modifier le positionnement de la demi-fiche (1), préalablement à l'opération de vissage, de manière que le vissage résultant de la synchronisation d'une translation (T) et d'une rotation (R) amène la demi-fiche (1) à la position finale désirée (X).

**2)** Procédé selon la revendication 1, caractérisé en ce que le positionnement de la demi-fiche (1) préalablement à l'opération de vissage est modifié par une translation (T').

**3)** Procédé selon la revendication 1, caractérisé en ce que le positionnement de la demi-fiche (1) préalablement à l'opération de vissage est modifié angulairement par une rotation sans translation.

Fig. 1

Fig. 2

Fig. 3

**Office européen des brevets**

# RAPPORT DE RECHERCHE EUROPEENNE

Numero de la demande

EP 92 44 0032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 158 757 (GACHE) <br> * le document en entier * <br> --- | 1 | B23P19/06 <br> B25B13/50 <br> B27M3/00 |
| A | FR-A-2 188 474 (GACHE) <br> * le document en entier * <br><br> ----- | 1 | |

**DOMAINES TECHNIQUES RECHERCHES (Int. Cl.5)**

B23P
B25B
B27M

Le présent rapport a été établi pour toutes les revendications

| Lieu de la recherche | Date d'achèvement de la recherche | Examinateur |
|---|---|---|
| LA HAYE | 17 JUILLET 1992 | RIS M. |